# EUROPÄISCHE PATENTSCHRIFT

(11) **EP 3 323 488 B1**
(45) Veröffentlichungstag und Bekanntmachung des Hinweises auf die Patenterteilung: **26.06.2019**
(21) Anmeldenummer: 17200523.3
(22) Anmeldetag: 08.11.2017
(51) Int. Cl.: B01D 33/11, B01D 33/46, B01D 33/76, B04B 7/18, B04B 11/08

(54) **FILTERZENTRIFUGE**
FILTER CENTRIFUGE
CENTRIFUGEUSE FILTRANTE

(30) Priorität: 21.11.2016 DE 102016122342
(43) Veröffentlichungstag der Anmeldung: 23.05.2018
(73) Patentinhaber: Andritz KMPT GmbH, 85256 Vierkirchen (DE)
(72) Erfinder: GRIM, Gunnar, 85258 Weichs (DE); HEGNAUER, Bruno, 82131 Gauting (DE)
(74) Vertreter: Viering, Jentschura & Partner mbB Patent- und Rechtsanwälte

(56) Entgegenhaltungen:
- EP-A2- 0 383 166
- CN-B- 102 698 888
- DE-A1- 1 432 886
- JP-A- 2004 188 322
- JP-A- 2006 187 754

## Beschreibung

Die vorliegende Erfindung betrifft eine Filterzentrifuge zum Ausfiltern eines Feststoffmaterials aus einer Suspension.

Filterzentrifugen werden zum Beispiel bei chemischen, pharmazeutischen und biologischen Anwendungen im industriellen Maßstab zur Filtration von Suspensionen (Fest-Flüssig-Gemischen) eingesetzt.

Als eine Bauform einer herkömmlichen Filterzentrifuge ist zum Beispiel eine diskontinuierliche Schälzentrifuge bekannt. Diese weist eine in einem Gehäuse drehbar gelagerte Filtertrommel auf, welcher mittels einer Suspension-Zuführvorrichtung, welche in die Filtertrommel hineinragt, eine zu filtrierende Suspension zugeführt wird. Ferner ragt, zumindest in einem Austragebetrieb, in welchem das ausgefilterte Filtermaterial aus der Filtertrommel ausgetragen wird, eine Feststoffmaterial-Austragvorrichtung in die Filtertrommel hinein, mittels welcher das ausgefilterte Feststoffmaterial aus der Filtertrommel ausgetragen wird. Ferner weist die Schälzentrifuge an einer Innenwand der Filtertrommel ein Filtermittel auf, zum Beispiel ein Filtertuch, welches zum Ausfiltern des Feststoffmaterials aus der Suspension dient und welches, zum Beispiel mittels Spannmitteln, in der Filtertrommel gehalten ist.

In einem normalen/regulären Filterbetrieb wird der sich drehenden Filtertrommel die zu filtrierende Suspension über die Suspension-Zuführvorrichtung zugeführt. Aufgrund der Drehung der Filtertrommel wird die Suspension via Fliehkraft radial nach außen zur Innenwand der Filtertrommel und somit zum Filtermittel gedrückt. Die Flüssigkeit der Suspension durchdringt das Filtermittel sowie das daran ausgefilterte Feststoffmaterial und wird aus der Filtertrommel abgeführt bzw. herausgeschleudert (zum Beispiel mittels in der Filtertrommel vorgesehenen Drainagebohrungen oder -löchern). Das ausgefilterte Feststoffmaterial verbleibt als Filterkuchen an dem Filtermittel und wird schließlich, zum Beispiel wenn ein geforderter Trennungsgrad von Flüssigkeit und Feststoffmaterial durch Ausschleudern der Flüssigkeit erreicht ist, im Austragebetrieb durch die Feststoffmaterial-Austragvorrichtung, zum Beispiel mittels eines Schälmessers, welches den Filterkuchen abschält, aus der Filtertrommel ausgetragen.

JP 2006 187754 A offenbart eine Zentrifuge mit einem Führungselement, das einen Führungsraum an einer Rückseite einer Abschabklinge ausbildet, einem Druckgasinjektionskopf zum Einblasen von Druckgas in Richtung eines dem Führungsraum zugewandten Abschnitts eines Filters, und einem Fensterteil zur Kommunikation des Führungsraums innerhalb des Führungselements und einem anderen Führungsraum an einer Vorderseite der Abschabklinge während es die Abschabklinge durchdringt, wobei ein Restkuchen von dem Filter durch das von dem Druckgasinjektionskopf eingeblasene Druckgas getrennt wird und der abgetrennte Restkuchen durch den Führungsraum, das Fensterteil und den anderen Führungsraum hindurchgeht.

Durch die Erfindung wird eine Filterzentrifuge zum Ausfiltern eines Feststoffmaterials aus einer Suspension geschaffen, die im Hinblick auf ein Austragen des ausgefilterten Feststoffmaterials aus der Filtertrommel verbessert ist.

Hierzu stellt die vorliegende Erfindung eine Filterzentrifuge zum Ausfiltern eines Feststoffmaterials aus einer Suspension gemäß Anspruch 1 bereit. Weitere Ausgestaltungen der erfindungsgemäßen Filterzentrifuge sind in den abhängigen Ansprüchen beschrieben.

Gemäß verschiedenen Aspekten der vorliegenden Erfindung hat eine Filterzentrifuge zum Ausfiltern eines Feststoffmaterials aus einer Suspension, die von dem Feststoffmaterial und einer Flüssigkeit gebildet ist, eine Filtertrommel, welche eine Filtertrommelinnenfläche und eine Filtertrommellängsachse definiert und welche um die Filtertrommellängsachse, zum Beispiel mittels eines Drehantriebs, zum Beispiel in eine Filtertrommelbetriebsdrehrichtung, drehbar ist. Die Filtertrommellängsachse kann zum Beispiel beliebig ausgerichtet/angeordnet sein. Die Filtertrommellängsachse kann zum Beispiel zumindest im Wesentlichen horizontal angeordnet sein. Die Filtertrommellängsachse kann zum Beispiel zumindest im Wesentlichen vertikal angeordnet sein. Die Filterzentrifuge hat ferner eine Feststoffmaterial-Austragevorrichtung zum Austragen des ausgefilterten Feststoffmaterials aus der Filtertrommel im Rahmen eines Austragebetriebs der Filterzentrifuge. Die Feststoffmaterial-Austragevorrichtung weist auf einen Austragevorrichtungs-Arm mit einem freien Armende, eine Feststoffmaterial-Austrageleitung, welche an dem Arm ausgebildet ist (z.B. indem sie separat vorgesehen und an dem Arm angebracht ist, oder z.B. indem sie von dem Arm selbst ausgebildet bzw. in diesem integriert ausgebildet ist) und über welche das ausgefilterte Feststoffmaterial (im Austragebetrieb) aus der Filtertrommel herausführbar ist (bzw. herausgeführt wird) und welche eine Feststoffmaterial-Einlassöffnung hat, welche umfänglich von einem Einlassöffnungsrand begrenzt ist und welche benachbart zu dem freien Armende angeordnet ist und über welche das ausgefilterte Feststoffmaterial (im Austragebetrieb) von der Filtertrommel in die Feststoffmaterial-Austrageleitung gelangen kann, und eine Klinge zum Eingreifen in das an der Filtertrommelinnenfläche (32) anhaftende, ausgefilterte Feststoffmaterial (im Austragebetrieb), wobei die Klinge eine Schneide definiert, die sich entlang eines Schneiden-Längsverlaufs erstreckt. Die Feststoffmaterial-Austrageleitung kann zum Beispiel ein Rohr oder ein Schlauch sein. Der Austragevorrichtungs-Arm ist, zum Beispiel mittels eines an eine Steuervorrichtung angeschlossenen Antriebs, gesteuert bewegbar eingerichtet, sodass im Austragebetrieb die Feststoffmaterial-Einlassöffnung mittels einer Bewegung des Austragevorrichtungs-Arms (z.B. radial) in die Nähe der Filtertrommelinnenfläche bewegbar ist (bzw. bewegt wird), um (im Austragebetrieb) das an der Filtertrommelinnenfläche anhaftende, ausgefilterte Feststoffmaterial aufnehmen zu können. Die Klinge ist derart in/an der Feststoffmaterial-Einlassöffnung angeordnet, dass die Klinge in Richtung quer zu ihrem Schneiden-Längsverlauf beidseitig der Schneide im Abstand zu dem Einlassöffnungsrand angeordnet ist, sodass (von der Klinge im Austragebetrieb) abgetragenes Feststoffmaterial bezüglich des Schneiden-Längsverlaufs beidseitig der Schneide durch die Feststoffmaterial-Einlassöffnung hindurch in die Feststoffmaterial-Austrageleitung gelangen kann.

Der Schneiden-Längsverlauf kann geradlinig sein und damit zum Beispiel eine Schneiden-Längsachse definieren/sein. Der Schneiden-Längsverlauf kann aber auch gekrümmt sein. Der Schneiden-Längsverlauf kann auch Unstetigkeitsstellen, d.h. z.B. Knicke aufweisen. Die Klinge kann z.B. auch von einer Doppelklinge mit einer ersten Teilklinge und einer zweiten Teilklinge gebildet sein, die sich bezüglich einer, z.B. sich quer zur Filtertrommellängsachse quer erstreckenden, Teilungsachse pfeilförmig, z.B. zumindest im Wesentlichen symmetrisch, erstrecken.

Ferner umfasst die obige Formulierung "Quer zum Schneiden-Längsverlauf" nicht nur exakt 90° oder zumindest im Wesentlichen 90° zum Schneiden-Längsverlauf, sondern umfasst auch Querrichtungen schräg zum Schneiden-Längsverlauf, wie es z.B. bei gekrümmtem und/oder pfeilförmigem Schneiden-Längsverlauf der Fall sein kann.

Das Eingreifen der Klinge in das an der Filtertrommelinnenfläche anhaftende, ausgefilterte Filtermaterial (d.h. z.B. den Filterkuchen) kann z.B. ein abtragendes Eingreifen, wie z.B. ein Abtragen (z.B. Abschälen), sein, welches sich z.B. dann ergibt, wenn sich die Klinge mit ihrem Schneiden-Längsverlauf zumindest im Wesentlichen parallel zur Filtertrommellängsachse erstreckt. Alternativ oder zusätzlich dazu kann das Eingreifen der Klinge auch ein umformendes Eingreifen, wie z.B. ein Umformen, sein, welches sich z.B. dann ergibt, wenn sich die Klinge mit ihrem Schneiden-Längsverlauf mehr schräg z.B. größer 35° oder größer gleich 45° (aber je kleiner 90°) zur Filtertrommellängsachse erstreckt; die Klinge wirkt dann z.B. nach Art eines umformenden Pflugs und kann auch z.B: eine entsprechende Pflugkörperform (z.B. auch eine Doppelpflugform) haben.

Im Falle dass die Klinge z.B. eher umformend als abtragend wirkt, wird durch das Umformen dennoch eine aureichende Auflockerung des ausgefilterten Feststoffmaterials erzielt, so dass das ausgefilterte Feststoffmaterial im Rahmen des Austragebetriebs durch ein durch die Feststoffmaterial-Austragleitung hindurch erfolgendes Absaugen von der Filtertrommelinnenfläche letztlich ablösbar/abtragbar ist. In diesem Falle ist die Klinge z.B. nicht das wesentlich oder tatsächlich abtragende Element; die Klinge hilft dennoch beim Abtragen bzw. das Abtragen erfolgt auch in diesem Falle mit Hilfe der Klinge. Das Saugen bzw. ein entsprechender Saugvorgang kann mittels einer weiter unten noch beschriebenen Druckerzeugungsvorrichtung bereitgestellt werden.

Die Klinge kann zum Beispiel feststehend oder bewegbar in/an der Feststoffmaterial-Einlassöffnung angeordnet sein. Die Klinge kann zum Beispiel zumindest im Austragebetrieb in Richtung parallel zum Schneiden-Längsverlauf (z.B. zu der Schneiden-Längsachse) beidseitig mit dem Einlassöffnungsrand verbunden sein. Die Klinge kann zum Beispiel (in Richtung des Schneiden-Längsverlaufs) langgestreckt sein und die Schneide kann sich optional in Längsrichtung der Klinge (bzw. in Richtung des Schneiden-Längsverlaufs), zum Beispiel ununterbrochen, entlang der gesamten Länge der Klinge erstrecken. Die Klinge kann z.B. allseitig, mit Ausnahme von Befestigungsstellen, größtenteils (z.B. >90%) im Abstand von einer Innenwandung der Feststoffmaterial-Austragleitung bzw. im Abstand vom Einlassöffnungsrand angeordnet sein.

Die Filterzentrifuge hat ferner eine Druckdifferenz-Erzeugungsvorrichtung zum Erzeugen einer Druckdifferenz zwischen der Feststoffmaterial-Einlassöffnung und einem Inneren der Feststoffmaterial-Austrageleitung, derart dass der Druck in der Feststoffmaterial-Austrageleitung kleiner ist als an der Feststoffmaterial-Einlassöffnung bzw. als in der äußeren Umgebung der Feststoffmateria-Einlassöffnung. Die Druckdifferenz kann zum Beispiel erzeugt werden durch mit Druck Beaufschlagen einer die Feststoffmaterial-Einlassöffnung umgebenden äußeren Umgebung und/oder durch mit Vakuum Beaufschlagen des Inneren der Feststoffmaterial-Austrageleitung. Die Druckdifferenz-Erzeugungsvorrichtung kann zum

Beispiel einen Kompressor und/oder eine Vakuumpumpe aufweisen. Das Austragen des (mit Hilfe der Klinge im Austragebetrieb) abgetragenen Feststoffmaterials aus der Filtertrommel kann zum Beispiel durch die Druckdifferenz bewirkt sein. Durch die Druckdifferenz kann das (mit Hilfe der Klinge im Austragebetrieb) abgetragene Feststoffmaterial zum Beispiel zumindest im Wesentlichen vollständig aus der Filtertrommel aus- bzw. abgesaugt werden. Durch die Druckdifferenz kann das (mit Hilfe der Klinge im Austragebetrieb) abgetragene und/oder umgeformte Feststoffmaterial zum Beispiel zumindest im Wesentlichen vollständig in die Feststoffmaterial-Austrageleitung eingesaugt werden.

Durch die Druckdifferenz zwischen der Feststoffmaterial-Einlassöffnung und dem Inneren der Feststoffmaterial-Austrageleitung kann zum Beispiel ein Fluidstrom (zum Beispiel ein Gasstrom) an/in der Feststoffmaterial-Einlassöffnung und/oder an/in einem Bereich, der benachbart zu der Feststoffmaterial-Einlassöffnung ist, erzeugt werden. Dadurch kann das von der Klinge im Austragebetrieb abgetragene und/oder umgeformte Feststoffmaterial fluidisiert und zumindest im Wesentlichen vollständig in die Feststoffmaterial-Austrageleitung eingesaugt werden.

Die Feststoffmaterial-Einlassöffnung und die Klinge (und optional die Schneide) können sich optional in Richtung der Filtertrommellängsachse zumindest im Wesentlichen über die gesamte Länge der Filtertrommelinnenfläche erstrecken.

Die Feststoffmaterial-Einlassöffnung und die Klinge (und optional die Schneide) können sich optional in Richtung der Filtertrommellängsachse über gleich oder weniger als die Hälfte, zum Beispiel über gleich oder weniger als ein Viertel, zum Beispiel über gleich oder weniger als ein Achtel, zum Beispiel über gleich oder weniger als ein Sechzehntel, der gesamten Länge der Filtertrommelinnenfläche erstrecken. Der Austragevorrichtungs-Arm kann ferner optional, zum Beispiel mittels des an die Steuervorrichtung angeschlossenen Antriebs, gesteuert translatorisch bewegbar eingerichtet sein, sodass zumindest im Austragebetrieb die Feststoffmaterial-Einlassöffnung und die Klinge mittels einer translatorischen Bewegung des Austragevorrichtungs-Arms gemeinsam in Richtung parallel zur Filtertrommellängsachse bewegbar ist, um die Feststoffmaterial-Einlassöffnung und die Klinge gemeinsam parallel zur Filtertrommellängsachse zu verschieben.

Der Austragevorrichtungs-Arm kann optional ein Hohlkörper mit einem inneren Hohlraum sein und die Feststoffmaterial-Austrageleitung kann von dem Hohlraum des Hohlkörpers gebildet sein. Der Hohlkörper ist zum Beispiel ein stangenförmiges hohles Rohr, von dessen hohlem Inneren die Feststoffmaterial-Austrageleitung gebildet wird.

Der Austragevorrichtungs-Arm kann optional um eine im Abstand zum freien Armende angeordnete Schwenkachse schwenkbar sein, welche zumindest im Wesentlichen parallel zur Filtertrommellängsachse und versetzt dazu ist. Der Austragevorrichtungs-Arm kann, zum Beispiel mittels des an die Steuervorrichtung angeschlossenen Antriebs, um die Schwenkachse geschwenkt werden, um die Feststoffmaterial-Einlassöffnung, zum Beispiel im Austragebetrieb, in die Nähe der Filtertrommelinnenfläche zu bewegen.

Der Schneiden-Längsverlauf (z.B. die Schneiden-Längsachse) kann zumindest im Austragebetrieb zumindest im Wesentlichen parallel zur Filtertrommellängsachse (und versetzt dazu) angeordnet sein.

Eine von der Klinge definierte Klingenfläche kann optional zumindest im Austragebetrieb in einem Winkel von größer 0°, zum Beispiel größer 30° oder größer 45° oder größer 60°, und kleiner 180°, zum Beispiel kleiner 150° oder kleiner 135° oder kleiner 120°, zu einer von der Feststoffmaterial-Einlassöffnung definierten Einlassöffnungsfläche angeordnet sein. Die Klingenfläche kann zum Beispiel eben sein oder kann gekrümmt und/oder gewölbt sein.

Die Schneide kann optional zumindest im Austragebetrieb zwischen der Feststoffmaterial-Einlassöffnung und der Filtertrommelinnenfläche angeordnet sein.

Die Filtertrommellängsachse kann optional zumindest im Wesentlichen horizontal angeordnet sein, wobei optional im Austragebetrieb die in die Nähe der Filtertrommelinnenfläche bewegte Feststoffmaterial-Einlassöffnung bezüglich der Filtertrommellängsachse im unteren Drittel der Filtertrommel angeordnet sein kann.

Die Filterzentrifuge kann ferner z.B: mit einem Drehantrieb zum drehenden Antreiben der Filtertrommel und mit einer Steuervorrichtung ausgestattet sein, welche mit dem Drehantrieb zu dessen Steuerung verbunden ist. Die Steuervorrichtung kann derart eingerichtet sein, dass von ihr der Drehantrieb derart gesteuert wird (z.B. steuerbar ist), dass in einem normalen/regulären Filterbetrieb, in welchem ein Ausfiltern des Feststoffmaterials an der Filtertrommelinnenfläche erfolgt, die Drehzahl der Filtertrommel höher ist als im Austragebetrieb. Die Steuervorrichtung ist z.B. derart eingerichtet, dass von ihr der Drehantrieb im Austragebetrieb derart gesteuert wird (z.B. steuerbar ist), dass die Drehzahl der Filtertrommel derart ist, dass das Verhältnis zwischen der auf das in der Filtertrommel vorliegende ausgefilterte Feststoffmaterial wirkenden Zentrifugalbeschleunigung und der Erdbeschleunigung (bzw. dass die auf das ausgefilterte Feststoffmaterial in der Filtertrommel wirkende G-Kraft) kleiner als eins ist. Dadurch bleibt, anders als im normalen Filterbetrieb, im Austragebetrieb das Feststoffmaterial nicht via Zentrifugalkraft an der Filtertrommelinnenfläche anhaften.

Beispielgebende, aber nicht einschränkende Ausführungsformen der vorliegenden Erfindung sind in den Figuren dargestellt und werden im Folgenden näher erläutert.

Es zeigen:
Figur 1 eine vereinfachte, schematische Ansicht einer Filtertrommel und einer Feststoffmaterial-Austragevorrichtung einer Filterzentrifuge gemäß einer ersten Ausführungsform der vorliegenden Erfindung,
Figur 2 eine vereinfachte, schematische, geschnittene Ansicht eines Abschnitts einer Filtertrommel und einer Feststoffmaterial-Austragevorrichtung einer Filterzentrifuge gemäß der ersten Ausführungsform der vorliegenden Erfindung,
Figur 3 eine vereinfachte, schematische, teilweise geschnittene Ansicht einer Filtertrommel und einer Feststoffmaterial-Austragevorrichtung einer Filterzentrifuge gemäß der ersten Ausführungsform der vorliegenden Erfindung,
Figur 4 eine vereinfachte, schematische, teilweise geschnittene Ansicht einer Filtertrommel und einer Feststoffmaterial-Austragevorrichtung einer Filterzentrifuge gemäß einer zweiten Ausführungsform der vorliegenden Erfindung,
Figur 5 eine vereinfachte, schematische, teilweise geschnittene Ansicht einer Filterzentrifuge gemäß der ersten Ausführungsform der vorliegenden Erfindung,
Figuren 6a und 6b vereinfachte, schematische, teilweise geschnittene Darstellungen einer Klinge einer Austragevorrichtung in einer Filterzentrifuge gemäß einer Ausführungsform der Erfindung,
Figuren 7a und 7b vereinfachte, schematische, teilweise geschnittene Darstellungen einer Klinge einer Austragevorrichtung in einer Filterzentrifuge gemäß einer anderen Ausführungsform der Erfindung, und
Figuren 8a und 8b vereinfachte, schematische, teilweise geschnittene Darstellungen einer Klinge einer Austragevorrichtung in einer Filterzentrifuge gemäß einer noch einer anderen Ausführungsform der Erfindung.

In den Figuren sind identische oder ähnliche Elemente mit identischen Bezugszeichen versehen, soweit dies zweckmäßig ist.

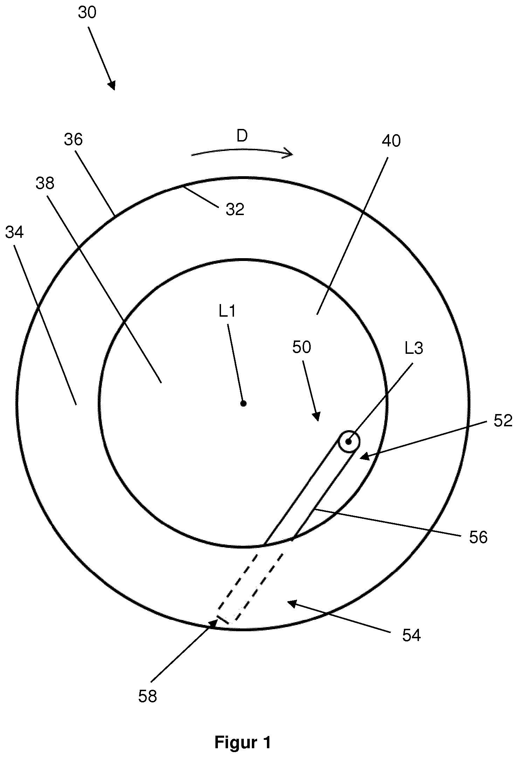

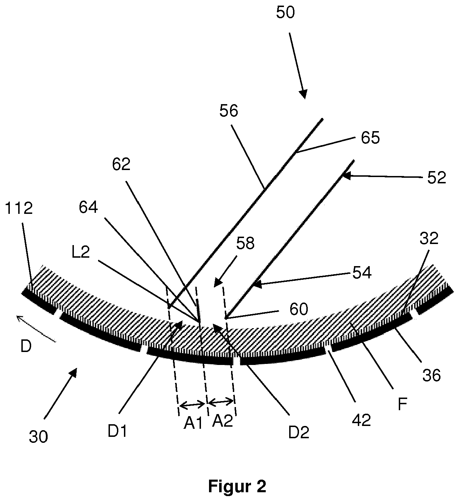

Wie anhand der Figuren 1-8b ersichtlich, weisen Filterzentrifugen 10 zum Ausfiltern eines Feststoffmaterials F aus einer Suspension, die von dem Feststoffmaterial F und einer Flüssigkeit gebildet ist, gemäß den verschiedenen Ausführungsformen der Erfindung auf eine Filtertrommel 30, welche eine Filtertrommelinnenfläche 32 und eine Filtertrommellängsachse L1 definiert und welche um die Filtertrommellängsachse L1, zum Beispiel mittels eines Drehantriebs 70, zum Beispiel in eine Filtertrommelbetriebsdrehrichtung D, drehbar ist, und eine Feststoffmaterial-Austragevorrichtung 50 zum Austragen des ausgefilterten Feststoffmaterials F aus der Filtertrommel 30 im Rahmen eines Austragebetriebs der Filterzentrifuge 10, wobei die Feststoffmaterial-Austragevorrichtung 50 aufweist einen Austragevorrichtungs-Arm 52 mit einem freien Armende 54, eine Feststoffmaterial-Austrageleitung 56, welche an dem Arm 52 angebracht ist und über welche das ausgefilterte Feststoffmaterial F aus der Filtertrommel 30 herausführbar ist (bzw. herausgeführt wird) und welche eine Feststoffmaterial-Einlassöffnung 58 hat, welche umfänglich von einem Einlassöffnungsrand 60 begrenzt ist und welche benachbart zu dem freien Armende 54 angeordnet ist und über welche das ausgefilterte Feststoffmaterial F von der Filtertrommel 30 in die Feststoffmaterial-Austrageleitung 56 gelangen kann, und eine Klinge 62 zum Eingreifen in das (z.B. zum Abtragen und/oder Umformen des) ausgefilterte(n) Feststoffmaterial(s) F von der Filtertrommelinnenfläche 32, welche eine Schneide 64 definiert, die sich entlang eines Schneiden-Längsverlaufs L2 erstreckt, wobei der Austragevorrichtungs-Arm 52 gesteuert bewegbar (zum Beispiel schwenkbar) eingerichtet ist, sodass im Austragebetrieb die Feststoffmaterial-Einlassöffnung 58 mittels einer Bewegung (zum Beispiel Schwenkbewegung) des Austragevorrichtungs-Arms 52 radial in die Nähe der Filtertrommelinnenfläche 32 bewegbar ist (bzw. bewegt wird), um das an der Filtertrommelinnenfläche 32 anhaftende, ausgefilterte Feststoffmaterial F aufnehmen zu können, und wobei die Klinge 62 in der Feststoffmaterial-Einlassöffnung 58 angeordnet ist, derart dass die Klinge 62 in Richtung quer zu ihrem Schneiden-Längsverlauf L2 beidseitig der Schneide 64 im Abstand (vergleiche Abstände A1 und A2 in Figuren 2 und Figuren 6a-8a) zu dem Einlassöffnungsrand 60 angeordnet ist, sodass abgetragenes Feststoffmaterial F bezüglich des Schneiden-Längsverlaufs L2 beidseitig der Schneide 64 durch die Feststoffmaterial-Einlassöffnung 58 hindurch in die Feststoffmaterial-Austrageleitung 56 gelangen kann. Das heißt, zwischen der Klinge 62 und einer Innenwandung 65 der Feststoffmaterial-Austrageleitung 56 liegt in Richtung quer zum Schneiden-Längsverlauf L2 ein jeweiliger Durchgang D1, D2 vor, über welche Durchgänge D1, D2 das abgetragene Feststoffmaterial F in die Feststoffmaterial-Austrageleitung 56 gelangen kann. Der Abstand A1 könnte auch als vorlaufender Abstand A1 zwischen der in Klingenführungsrichtung vorderen Seite der Klinge 62 und dem dieser vorderen Seite gegenüberliegenden Teil des Einlassöffnungsrands 60 bezeichnet werden, und der Abstand A2 könnte dementsprechend auch als nachlaufender Abstand A2 zwischen der in Klingenführungsrichtung hinteren Seite der Klinge 62 und dem dieser hinteren Seite gegenüberliegenden Teil des Einlassöffnungsrands 60 bezeichnet werden. Entsprechend könnte der Durchgang D1 auch vorlaufender Durchgang und der Durchgang D2 als nachlaufender Durchgang bezeichnet werden.

Die Filtertrommellängsachse L1 kann beliebig angeordnet werden, zum Beispiel zumindest im Wesentlichen horizontal (Horizontal-Filterzentrifuge) oder zumindest im Wesentlichen vertikal (Vertikal-Filterzentrifuge). Hier zeigt Figur 1 zum Beispiel eine Seitenansicht einer Filtertrommel 30 und einer Feststoffmaterial-Austragevorrichtung 50 einer Horizontal-Filterzentrifuge. Alternativ könnte Figur 1 eine Draufsicht einer Filtertrommel 30 und einer Feststoffmaterial-Austragevorrichtung 50 einer Vertikal-Filterzentrifuge zeigen. Wenn die Filtertrommellängsachse L1 zumindest im Wesentlichen horizontal angeordnet ist, kann im Austragebetrieb die in die Nähe der Filtertrommelinnenfläche 32 bewegte Feststoffmaterial-Einlassöffnung 58 bezüglich der Filtertrommellängsachse L1 im unteren Drittel der Filtertrommel 30 angeordnet sein.

Der Schneiden-Längsverlauf L2 kann (zumindest im Austragebetrieb) parallel zur Filtertrommellängsachse L1 und versetzt dazu angeordnet sein. Eine von der Klinge 62 definierte Klingenfläche kann (zumindest im Austragebetrieb) in einem Winkel von größer 0° und kleiner 180° zu einer von der Feststoffmaterial-Einlassöffnung 58 definierten Einlassöffnungsfläche angeordnet sein. In Figur 2 ist die Klingenfläche zum Beispiel in einem Winkel von etwa 75° zur Einlassöffnungsfläche angeordnet. Ferner kann die Schneide 64 (zumindest im Austragebetrieb) zwischen der Feststoffmaterial-Einlassöffnung 58 und der Filtertrommelinnenfläche 32 angeordnet sein (siehe insbesondere Figur 2). Durch die Klinge 62 kann, je nach Ausführung, z.B. das ausgefilterte Feststoffmaterial F im Austragebetrieb von der Filtertrommelinnenfläche 32 abgetragen (zum Beispiel abgeschält) und/oder umgeformt werden, wenn die Klinge 62 (insbesondere deren Schneide 64) im Austragebetrieb in das ausgefilterte Feststoffmaterial F eingreift.

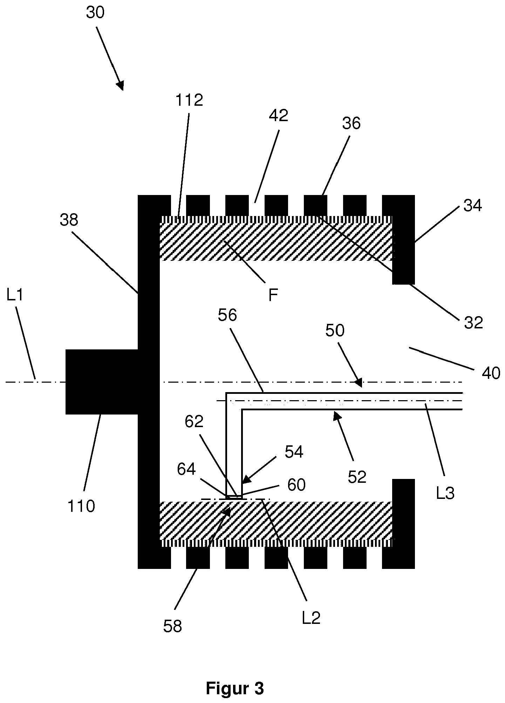

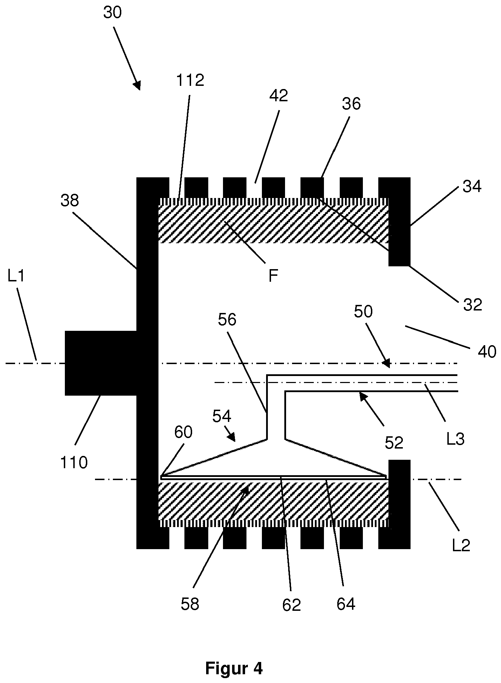

Die Filtertrommel 30 weist zum Beispiel auf einen Trommelmantel 36, welcher eine hohlzylindrische Form hat, einen Trommelboden 38, welcher an einem axialen Ende des Trommelmantels 36 (zum Beispiel in Figuren 3 und 4 an einem linken Ende des Trommelmantels 36) mit diesem verbunden ist und dieses Ende des Trommelmantels 36 verschließt, und einen Trommelkragen 34, welcher an dem anderen (bzw. gegenüberliegenden) axialen Ende des Trommelmantels 36 (zum Beispiel in Figuren 3 und 4 an einem rechten Ende des Trommelmantels 36) mit diesem verbunden ist und welcher eine zentrale Öffnung 40 aufweist. Der Trommelmantel 36 hat mehrere radiale Drainagebohrungen bzw. -löcher 42, durch die die Flüssigkeit der Suspension in einem regulären Filterbetrieb aus der Filtertrommel 30 abgeführt bzw. herausgeschleudert wird. Die Filtertrommelinnenfläche 32 ist zum Beispiel von einer der Filtertrommellängsachse L1 zugewandten (Innen-)Fläche des (hohlzylindrischen) Trommelmantels 36 gebildet. Die Filterzentrifugen 10 können ferner eine Antriebswelle 110 aufweisen, welche an einer zentralen Position des Trommelbodens 38 mit diesem verbunden ist, sodass eine von der Antriebswelle 110 definierte Wellenachse zumindest im Wesentlichen deckungsgleich mit der Filtertrommellängsachse L1 ist. Die Filterzentrifugen 10 können ferner ein Filtermedium 112 (zum Beispiel ein Filtertuch, welches aus einem Gewebematerial hergestellt ist) aufweisen, welches in die Filtertrommel 30 an die Filtertrommelinnenfläche 32 anliegend eingesetzt ist, sodass die Drainagebohrungen bzw. -löcher 42 vollständig von dem Filtermedium 112 abgedeckt sind. Das Filtermedium 112 ist dazu eingerichtet, das Feststoffmaterial F aus der zu filtrierenden Suspension zurückzuhalten bzw. auszufiltern und die Flüssigkeit der zu filtrierenden Suspension durchzulassen.

Die Filterzentrifugen 10 gemäß den diversen Ausführungsformen können ferner aufweisen einen Drehantrieb 70, welcher mit der Antriebswelle 110 verbunden ist, und eine Steuervorrichtung S, welche mit dem Drehantrieb 70 verbunden ist. Die Steuervorrichtung S kann eingerichtet sein, um den Drehantrieb 70 im Austragebetrieb so zu steuern, dass eine Drehgeschwindigkeit der Filtertrommel 30 im Vergleich zu dem regulären Filterbetrieb um ein mehrfaches kleiner ist. Im Austragebetrieb kann die Drehgeschwindigkeit der Filtertrommel zum Beispiel kleiner als 20% oder kleiner als 10% oder kleiner als 5% der Drehgeschwindigkeit der Filtertrommel im regulären Filterbetrieb sein. Der Drehantrieb weist hier eine Antriebsvorrichtung 72 (zum Beispiel einen elektrischen Antriebsmotor) und eine Übertragungsvorrichtung 74 auf, mit der ein Antriebsdrehmoment der Antriebsvorrichtung 72 auf die Antriebswelle 110 übertragen wird.

Der Austragevorrichtungs-Arm 52 kann um eine im Abstand zum freien Armende 54 angeordnete Schwenkachse L3 schwenkbar sein, welche zumindest im Wesentlichen parallel zur Filtertrommellängsachse L1 und versetzt dazu ist. Zur Schwenkbewegung und/oder zur später erläuterten translatorischen Bewegung des Austragevorrichtungs-Arms 52 kann die Feststoffmaterial-Austragevorrichtung 50 einen an die Steuervorrichtung S angeschlossen Antrieb 90 aufweisen. Der Antrieb 90 kann eine Antriebsvorrichtung 92 (zum Beispiel einen elektrischen Antriebsmotor) und eine Übertragungsvorrichtung 94 aufweisen, die mit der Antriebsvorrichtung 92 und dem Austragevorrichtungs-Arm 52 verbunden ist und über die eine Antriebsbewegung von der Antriebsvorrichtung 92 auf den Austragevorrichtungs-Arm 52 übertragen wird. Durch die Schwenkbewegung kann die Feststoffmaterial-Einlassöffnung 58 (radial bezüglich der Filtertrommellängsachse) in die Nähe der Filtertrommelinnenfläche 32 bewegt werden, so dass das ausgefilterte Feststoffmaterial F mittels der Klinge 62 abgetragen werden kann. Der Austragevorrichtungs-Arm 52 kann ferner ein Hohlkörper (zum Beispiel ein Rohr oder ein Schlauch) mit einem inneren Hohlraum sein, und die Feststoffmaterial-Austrageleitung 56 kann von dem Hohlraum des Hohlkörpers gebildet sein.

Im regulären/normalen Filterbetrieb ist der Austragevorrichtungs-Arm 52 zum Beispiel so in der Filtertrommel 30 angeordnet, dass die Feststoffmaterial-Einlassöffnung 58 zumindest doppelt so weit von der Filtertrommelinnenfläche 32 entfernt ist wie im Austragebetrieb, um ein Eintreten bzw. Eindringen der Suspension in die Feststoffmaterial-Austrageleitung 56 durch die Feststoffmaterial-Einlassöffnung 58 zumindest zu behindern. Dazu kann der Austragevorrichtungs-Arm 52 zum Beispiel mittels des Antriebs 90 um die Schwenkachse L3 geschwenkt werden.

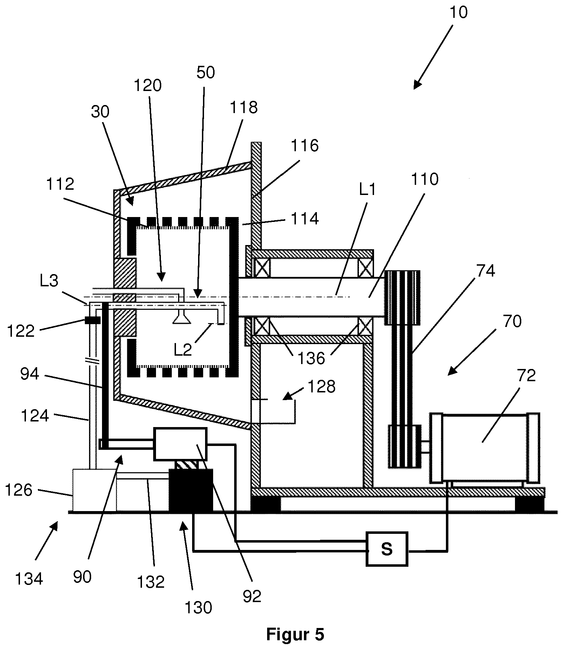

Die Filterzentrifugen 10 gemäß den diversen Ausführungsformen weisen ferner auf eine Druckdifferenz-Erzeugungsvorrichtung 130 zum Erzeugen einer Druckdifferenz zwischen der Feststoffmaterial-Einlassöffnung 58 und einem Inneren der Feststoffmaterial-Austrageleitung 56 derart, dass der Druck in der Feststoffmaterial-Austrageleitung 56 kleiner ist als an der Feststoffmaterial-Einlassöffnung 58. In der in Figur 5 gezeigten Ausführungsform weist die Druckdifferenz-Erzeugungsvorrichtung 130 eine Vakuumpumpe auf. Die dort gezeigte (Horizontal-)Filterzentrifuge 10 weist ferner eine Feststoffmaterial-Sammelvorrichtung 134 auf, über welche die Druckdifferenz-Erzeugungsvorrichtung 130 mit der Feststoffmaterial-Austragevorrichtung 50 verbunden ist. Die Feststoffmaterial Sammelvorrichtung 134 hat eine Feststoffmaterial-Leitung 124, ein Verbindungsstück 122, einen Feststoffmaterial-Sammelbehälter 126 und eine Verbindungsleitung 132. Das Verbindungsstück 122 ist mit einem Ende der Feststoffmaterial-Leitung 124 verbunden und kann an die Feststoffmaterial-Austragevorrichtung 50 angeschlossen sein. Ein anderes Ende der Feststoffmaterial-Leitung 124 ist an den Feststoffmaterial-Sammelbehälter 126 angeschlossen. Ein Ende der Verbindungsleitung 132 ist an den Feststoffmaterial-Sammelbehälter 126 angeschlossen und ein anderes Ende der Verbindungsleitung 132 ist an die Druckdifferenz-Erzeugungsvorrichtung 130 angeschlossen. Dadurch kann die Feststoffmaterial-Austrageleitung 56 mit dem von der Vakuumpumpe der Druckdifferenz-Erzeugungsvorrichtung 130 erzeugten Vakuum beaufschlagt werden.

Die Filterzentrifugen 10 gemäß den diversen Ausführungsformen können, wie in Figur 5 gezeigt, ferner einen Zentrifugendeckel 118 aufweisen, welcher zum Öffnen schwenkbar mit einem Maschinengestell bzw. Maschinengehäuse 116 verbunden ist.

An dem Zentrifugendeckel 118 können zum Beispiel eine Suspension-Zuführvorrichtung 120 zum Zuführen der Suspension zu der Filtertrommel 30 sowie die Feststoffmaterial-Austragvorrichtung 50 angebracht sein. Im Geschlossen-Zustand des Zentrifugendeckels 118 verschließt dieser die Öffnung 40 der Filtertrommel 30 dicht, wobei die Suspension-Zuführvorrichtung 120 und die Feststoffmaterial-Austragvorrichtung 50 in die Filtertrommel 10 hineinragen, und umgibt gemeinsam mit dem Maschinengestell 116 die Filtertrommel 30, sodass die Filtertrommel 30 in einem zwischen dem Zentrifugendeckel 118 und dem Maschinengestell 116 abgedichtet ausgebildeten Raum 114 angeordnet ist. Ferner ist in dem Maschinengestell 116 auf Höhe eines tiefsten Punktes des Raumes 114 eine mit dem Raum 114 in Verbindung stehende Flüssigkeit-Austragvorrichtung 128 vorgesehen. Das Maschinengestell 116 weist ferner zum Beispiel zwei Trommellager 136 auf, in denen die Antriebswelle 110 gelagert ist (zum Beispiel zumindest im Wesentlichen horizontal), wobei die Filtertrommel 30 mittels der Antriebswelle 110 an dem Maschinengestell 116 zum Beispiel fliegend gelagert angebracht sein kann.

Die in den Figuren 1, 2, 3 und 5 gezeigte Feststoffmaterial-Einlassöffnung 58, Klinge 62 und Schneide 64 erstrecken sich in Richtung der Filtertrommellängsachse L1 jeweils über zum Beispiel etwa 5% der gesamten Länge der Filtertrommelinnenfläche 32 und der Austragevorrichtungs-Arm 52 ist ferner, zum Beispiel mittels des oben erläuterten Antriebs 90, gesteuert translatorisch (entlang der Filtertrommellängsachse L1) bewegbar eingerichtet, sodass im Austragebetrieb die Feststoffmaterial-Einlassöffnung 58 mittels einer translatorischen Bewegung des Austragevorrichtungs-Arms 52 in Richtung parallel zur Filtertrommellängsachse L1 bewegbar ist (bzw. bewegt wird), um die Feststoffmaterial-Einlassöffnung 58 und die Klinge 62 gemeinsam parallel zur Filtertrommellängsachse L1 zu verschieben.

Die in der Figur 4 gezeigte Feststoffmaterial-Einlassöffnung 58, Klinge 62 und Schneide 64 erstrecken sich in Richtung der Filtertrommellängsachse L1 jeweils zumindest im Wesentlichen über die gesamte Länge der Filtertrommelinnenfläche 32. Dadurch kann auf die translatorische Bewegung des Austragevorrichtungs-Arms 52 verzichtet werden.

Die Funktionsweise der in Figur 5 gezeigten Filterzentrifuge 10 ist wie folgt. Mittels der Suspension-Zuführvorrichtung 120 wird der Filtertrommel 30 im Rahmen des regulären Filterbetriebs der Filtertrommel 10 die zu filtrierende Suspension zugeführt. Die Filtertrommel 30 wird mittels der Antriebsvorrichtung 70 in Rotation versetzt, wodurch die Suspension via Fliehkraft zur Filtertrommelinnenfläche 32 gezwungen wird. Die Flüssigkeit der Suspension kann das an der Filtertrommelinnenfläche 32 angebrachte Filtertuch 112 sowie die Filtertrommel 30 durch die Drainagebohrungen bzw. -löcher 42 durchdringen und somit aus der Filtertrommel 30 in den Raum 114 geschleudert werden. Die Flüssigkeit wird schließlich mittels der Flüssigkeit-Austragvorrichtung 128 aus dem Raum 114 abgeführt. Das Feststoffmaterial F der Suspension wird durch das Filtermedium 112 zurückgehalten und dadurch aus der Suspension ausgefiltert. Schließlich wird bei Erreichen eines ausreichenden Ausschleuderns der Flüssigkeit das an dem Filtertuch 112 als Filterkuchen anliegende, ausgefilterte Feststoffmaterial F im Rahmen des Austragebetriebs der Filterzentrifuge 10 von dem Filtertuch 112 mittels der Feststoffmaterial-Austragvorrichtung 50 unter gesteuertem Drehen der Filtertrommel 30 und unter gesteuertem Bewegen des Austragevorrichtungs-Arms 52 entfernt und mittels der Feststoffmaterial-Austragvorrichtung 50 aus der Filtertrommel 30 ausgetragen. Der reguläre Filterbetrieb unterscheidet sich von dem Austragebetrieb zumindest dadurch, dass die Drehgeschwindigkeit bzw. die Drehzahl der Filtertrommel 30 im Austragebetrieb (zum Beispiel um ein mehrfaches) kleiner ist als im regulären Filterbetrieb und die Position der Feststoffmaterial-Einlassöffnung 58 in der Filtertrommel 30 verschieden ist. Im Austragebetrieb ist die Feststoffmaterial-Einlassöffnung 58 in die Nähe der Filtertrommelinnenfläche bewegt, um das an der Filtertrommelinnenfläche 32 anhaftende Feststoffmaterial F aufnehmen zu können. Im regulären Filterbetrieb ist die Feststoffmaterial-Einlassöffnung 58 von der Filtertrommelinnenfläche wegbewegt, zum Beispiel in die Nähe der Filtertrommellängsachse L1 bewegt, um ein Eindringen der zu filtrierenden Suspension in die Feststoffmaterial-Austrageleitung 56 zumindest im Wesentlichen vollständig zu verhindern/unterbinden.

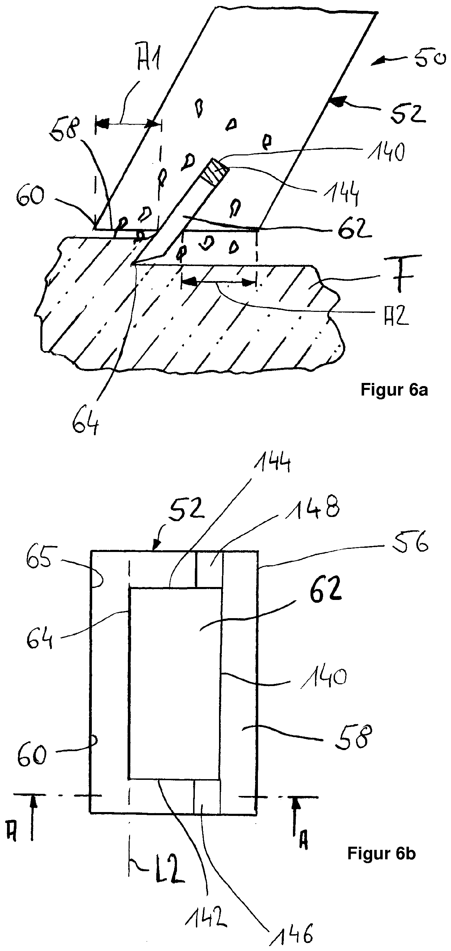

In der Figur 6a ist ein Schnitt durch einen Austragevorrichtungs-Arm 52 einer Feststoffmaterial-Austragevorrichtung 50 einer wie z.B. vorausgehend beschriebenen Filterzentrifuge 10 gemäß einer Ausführungsform der Erfindung entlang der in Fig. 6b mit A-A bezeichneten Linie schematisch dargestellt, und Fig. 6b zeigt die im Austragevorrichtungs-Arm 52 angeordnet Klinge 62 schematisch von oben her gesehen.

Wie aus den Figuren 6a und 6b ersichtlich ist, ist bei dieser Ausführungsform die Klinge 62 in einer rechteckigen Plattenform ausgebildet, wobei die Schneide 64 geradlinig ist, sodass der Schneiden-Längsverlauf L2 einer Schneiden-Längsachse entspricht bzw. diese definiert. Entlang des der Schneide 64 gegenüberliegenden Längsrands 140 der Klinge 62 ist die Klinge 62 beidseitig an ihren Stirnseiten 142, 144 durch einen ersten und einen zweite Haltestift 146, 149 verlängert, über welche die Klinge 62 an der Innenwandung 65 der Feststoffmaterial-Austrageleitung 56 gehalten ist. Wie aus Figur 6b ersichtlich ist, ist die Klinge 62 bei dieser Ausführungsform mit Ausnahme an ihren Haltestiften 146, 148 rundherum im Abstand von der Innenwandung 65 der Feststoffmaterial-Austrageleitung 56 bzw. vom Einlassöffnungsrand 60 der Feststoffmaterial-Einlassöffnung 58 angeordnet ist, sodass von der Filtertrommelinnenfläche abgelöste Stücke des ausgefilterten Feststoffmaterials (Filterkuchens) F allseitig an der Klinge 62 vorbei über die Feststoffmaterial-Einlassöffnung 58 in die Feststoffmaterial-Austrageleitung 56 gelangen können.

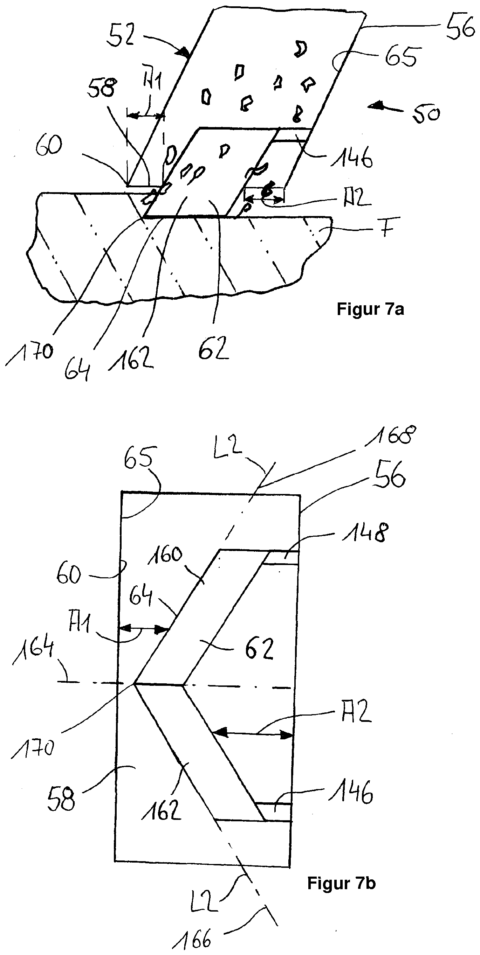

Die Figur 7a zeigt eine seitliche geschnittene Ansicht eines Austragevorrichtungs-Arms 52 einer Feststoffmaterial-Austragevorrichtung 50 einer wie z.B. vorausgehend beschriebenen Filterzentrifuge 10 gemäß einer anderen Ausführungsform, mit einer Klinge 62 gemäß einer anderen Variante, und Figur 7b zeigt die Ausführungsform von Figur 7a in einer vereinfachten, schematischen, teilweise aufgeschnittenen Ansicht von oben her.

Bei der Ausführungsform gemäß Figuren 7a und 7b ist die Klinge 52 als eine pfeilförmig ausgebildete Doppel-Klinge ausgebildet mit einer ersten und einer zweiten Teilklinge 160, 162, die sich bezüglich einer, z.B. sich quer zur Filtertrommellängsachse erstreckenden, Teilungsachse 164 pfeilförmig, z.B. zumindest im Wesentlichen symmetrisch dazu, erstrecken. An den von der Teilungsachse 164 im Abstand angeordneten Enden der ersten und der zweiten Teilklinge 160, 162 ist jeweils ein erster und ein zweiter Haltestift 146, 148 ausgebildet, über welche die Klinge 62 an der Innenwandung 65 der Feststoffmaterial-Austrageleitung 56 gehalten ist. Wie aus Figur 7b ersichtlich ist, ist die Klinge 62 bei dieser Ausführungsform, mit Ausnahme an ihren Haltestiften 146, 148, rundherum im Abstand von der Innenwandung 65 der Feststoffmaterial-Austrageleitung 56 bzw. vom Einlassöffnungsrand 60 der Feststoffmaterial-Einlassöffnung 58 angeordnet ist, sodass von der Filtertrommelinnenfläche abgelöste Stücke des ausgefilterten Feststoffmaterials (Filterkuchens) F allseitig an der Klinge 62 vorbei über die Feststoffmaterial-Einlassöffnung 58 in die Feststoffmaterial-Austrageleitung 56 gelangen können.

Wie ferner aus der Figur 7b ersichtlich ist, hat der Schneiden-Längsverlauf L2 der Schneide 64 entsprechend der Pfeilform der (Doppel-)Klinge 62 eine Pfeilform mit zwei geradlinigen, zueinander gewinkelt verlaufenden Längsverlauf-Teilabschnitten 166, 168, die an einer Klingenspitze 170 zusammentreffen. Die erste und die zweite Teilklinge 160, 162 sind jeweils als (zumindest im Wesentlichen) ebene, plattenförmige Klingenkörper ausgebildet und z.B. an ihrem der Klingenspitze 170 zugewandten Stirnrand (z.B. fest) miteinander verbunden.

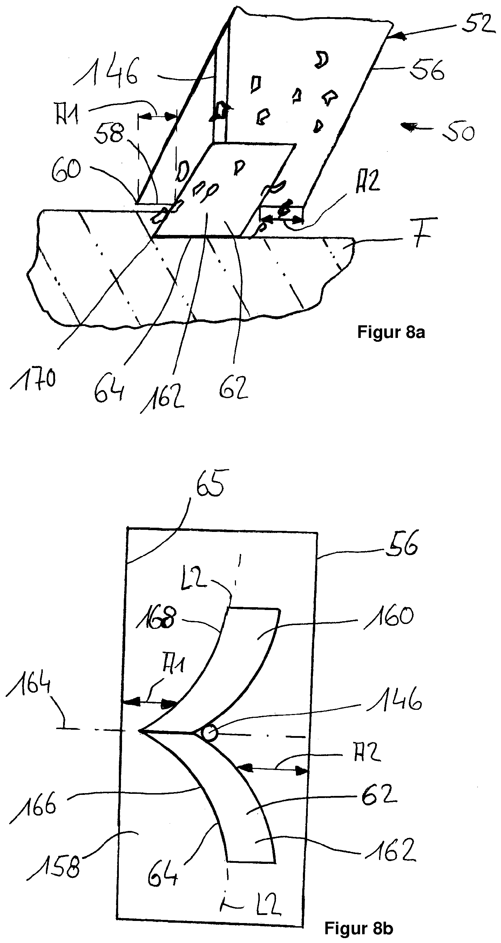

Die Figur 8a zeigt eine seitliche geschnittene Ansicht eines Austragevorrichtungs-Arms 52 einer Feststoffmaterial-Austragevorrichtung 50 einer wie z.B. vorausgehend beschriebenen Filterzentrifuge 10 gemäß einer noch anderen Ausführungsform, mit einer Klinge 62 gemäß einer anderen Variante, und Figur 8b zeigt die Ausführungsform von Figur 8a in einer vereinfachten, schematischen, teilweise aufgeschnittenen Ansicht von oben her.

Bei der Ausführungsform der Figuren 8a und 8b ist die Klinge 62 ebenfalls als eine pfeilförmig ausgebildete Doppel-Klinge ausgebildet mit einer ersten und einer zweiten Teilklinge 160, 162, die sich bezüglich einer, z.B. sich quer zur Filtertrommellängsachse erstreckenden, Teilungsachse 164 pfeilförmig, z.B. zumindest im Wesentlichen symmetrisch dazu, erstrecken. An den der Teilungsachse 164 zugewandten Endabschnitten der ersten und der zweiten Teilklinge 160, 162 ist ein Haltestift 146 ausgebildet, über welchen die Klinge 62 an der Innenwandung 65 der Feststoffmaterial-Austrageleitung 56 gehalten ist. Wie aus Figur 8b ersichtlich ist, ist die Klinge 62 bei dieser Ausführungsform mit Ausnahme an ihren Haltestiften 146, 148 rundherum im Abstand von der Innenwandung 65 der Feststoffmaterial-Austrageleitung 56 bzw. vom Einlassöffnungsrand 60 der Feststoffmaterial-Einlassöffnung 58 angeordnet ist, sodass von der Filtertrommelinnenfläche abgelöste Stücke des ausgefilterten Feststoffmaterials (Filterkuchens) F allseitig an der Klinge 62 vorbei über die Feststoffmaterial-Einlassöffnung 58 in die Feststoffmaterial-Austrageleitung 56 gelangen können.

Wie ferner aus der Figur 8b ersichtlich ist, hat der Schneiden-Längsverlauf L2 der Schneide 64 entsprechend der Pfeilform der (Doppel-)Klinge 62 eine Pfeilform mit zwei zueinander gewinkelt verlaufenden Längsverlauf-Teilabschnitten 166, 168, die an einer Spitze 170 zusammentreffen. Die erste und die zweite Teilklinge 160, 162 sind jeweils als auf Seiten der Schneide 64 konkav gewölbte, plattenförmige Klingenkörper ausgebildet und z.B. an ihrem der Klingenspitze 170 zugewandten Stirnrand fest miteinander verbunden. Der jeweilige Längsverlauf-Teilabschnitt 166, 168 ist entsprechend konkav gekrümmt; d.h. die Schneide 64 verläuft entlang des jeweiligen Längsverlauf-Teilabschnitts 166, 168 entgegen der Schneidrichtung/Klingenführungsrichtung konkav gekrümmt. Bei dieser Ausführungsform hat die Klinge 62 z.B. die Form eines Doppelpflugs, wobei das ausgefilterte Feststoffmaterial F nicht unbedingt von der Klinge 62 abgetragen wird, sondern auch z.B. zumindest teilweise lediglich umgeformt wird, wobei dann das Abtragen letztlich durch eine Saugwirkung/Sogwirkung erfolgt, welche erreicht werden kann durch eine von einer Druckdifferenz-Erzeugungsvorrichtung 130 (vgl. Fig. 5) erzeugte Druckdifferenz zwischen einem im Inneren der Feststoffmaterial-Austrageleitung 56 vorherrschenden Innendruck und einem demgegenüber höheren, äußeren Umgebungsdruck außen um die Feststoffmaterial-Einlassöffnung 58 herum.

Aufgrund der Pfeil- bzw. Pflugform der Klinge 62 in den Ausführungsform von Figuren 7a-8b, sind die Abstände A1, A2 der Klinge 62 zum Einlassöffnungsrand 60 in Richtung quer zum Klingen-Längsverlauf L2 unterschiedlich.
Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. Filterzentrifuge (10) zum Ausfiltern eines Feststoffmaterials (F) aus einer Suspension, die von dem Feststoffmaterial (F) und einer Flüssigkeit gebildet ist, mit
einer Filtertrommel (30), welche eine Filtertrommelinnenfläche (32) und eine Filtertrommellängsachse (L1) definiert und welche um die Filtertrommellängsachse (L1) drehbar ist, und
einer Feststoffmaterial-Austragevorrichtung (50) zum Austragen des ausgefilterten Feststoffmaterials (F) aus der Filtertrommel (30) im Rahmen eines Austragebetriebs der Filterzentrifuge (10),
wobei die Feststoffmaterial-Austragevorrichtung (50) aufweist einen Austragevorrichtungs-Arm (52) mit einem freien Armende (54), eine Feststoffmaterial-Austrageleitung (56), welche an dem Arm (52) ausgebildet ist und über welche das ausgefilterte Feststoffmaterial (F) aus der Filtertrommel (30) herausführbar ist und welche eine Feststoffmaterial-Einlassöffnung (58) hat, welche umfänglich von einem Einlassöffnungsrand (60) begrenzt ist und welche benachbart zu dem freien Armende (54) angeordnet ist und über welche das ausgefilterte Feststoffmaterial (F) von der Filtertrommel (30) in die Feststoffmaterial-Austrageleitung (56) gelangen kann, und eine Klinge (62) zum Eingreifen in das an der Filtertrommelinnenfläche (32) anhaftende, ausgefilterte Feststoffmaterial (F), wobei die Klinge (62) eine Schneide (64) definiert, die sich entlang eines Schneiden-Längsverlaufs (L2) erstreckt,
wobei der Austragevorrichtungs-Arm (52) gesteuert bewegbar eingerichtet ist, sodass im Austragebetrieb die Feststoffmaterial-Einlassöffnung (58) mittels einer Bewegung des Austragevorrichtungs-Arms (52) in die Nähe der Filtertrommelinnenfläche (32) bewegbar ist, um das an der Filtertrommelinnenfläche (32) anhaftende, ausgefilterte Feststoffmaterial (F) aufnehmen zu können, und
wobei die Klinge (62) in der Feststoffmaterial-Einlassöffnung (58) angeordnet ist, derart dass die Klinge (62) in Richtung quer zu ihrem Schneiden-Längsverlauf (L2) beidseitig der Schneide (64) im Abstand (A1, A2) zu dem Einlassöffnungsrand (60) angeordnet ist, sodass abgetragenes Feststoffmaterial (F) bezüglich des Schneiden-Längsverlaufs (L2) beidseitig der Schneide (64) durch die Feststoffmaterial-Einlassöffnung (58) hindurch in die Feststoffmaterial-Austrageleitung (56) gelangen kann, und
ferner mit einer Druckdifferenz-Erzeugungsvorrichtung (130) zum Erzeugen einer Druckdifferenz zwischen der äußeren Umgebung der Feststoffmaterial-Einlassöffnung (58) und einem Inneren der Feststoffmaterial-Austrageleitung (56), derart dass der Druck in der Feststoffmaterial-Austrageleitung (56) kleiner ist als an der Feststoffmaterial-Einlassöffnung (58).

2. Filterzentrifuge (10) gemäß Anspruch 1, wobei sich die Feststoffmaterial-Einlassöffnung (58) und die Klinge (62) in Richtung der Filtertrommellängsachse (L1) zumindest im Wesentlichen über die gesamte Länge der Filtertrommelinnenfläche (32) erstrecken.

3. Filterzentrifuge (10) gemäß Anspruch 1, wobei sich die Feststoffmaterial-Einlassöffnung (58) und die Klinge (62) in Richtung der Filtertrommellängsachse (L1) über gleich oder weniger als die Hälfte der gesamten Länge der Filtertrommelinnenfläche (32) erstrecken, und wobei der Austragevorrichtungs-Arm (52) ferner gesteuert translatorisch bewegbar eingerichtet ist, sodass zumindest im Austragebetrieb die Feststoffmaterial-Einlassöffnung (58) mittels einer translatorischen Bewegung des Austragevorrichtungs-Arms (52) in Richtung parallel zur Filtertrommellängsachse (L1) bewegbar ist, um die Feststoffmaterial-Einlassöffnung (58) und die Klinge (62) gemeinsam parallel zur Filtertrommellängsachse (L1) zu verschieben.

4. Filterzentrifuge (10) gemäß einem der Ansprüche 1-3, wobei der Austragevorrichtungs-Arm (52) ein Hohlkörper mit einem inneren Hohlraum ist und die Feststoffmaterial-Austrageleitung (56) von dem Hohlraum des Hohlkörpers gebildet ist.

5. Filterzentrifuge (10) gemäß einem der Ansprüche 1-4, wobei der Austragevorrichtungs-Arm (52) um eine im Abstand zum freien Armende (54) angeordnete Schwenkachse (L3) schwenkbar ist, welche zumindest im Wesentlichen parallel zur Filtertrommellängsachse (L1) und versetzt dazu ist.

6. Filterzentrifuge (10) gemäß einem der Ansprüche 1-5, wobei der Schneiden-Längsverlauf (L2) zumindest im Austragebetrieb zumindest im Wesentlichen parallel zur Filtertrommellängsachse (L1) ist.

7. Filterzentrifuge (10) gemäß einem der Ansprüche 1-6, wobei eine von der Klinge (62) definierte Klingenfläche zumindest im Austragebetrieb in einem Winkel von größer 0° und kleiner 180° zu einer von der Feststoffmaterial-Einlassöffnung (58) definierten Einlassöffnungsfläche angeordnet ist.

8. Filterzentrifuge (10) gemäß einem der Ansprüche 1-7, wobei die Schneide (64) zumindest im Austragebetrieb zwischen der Feststoffmaterial-Einlassöffnung (58) und der Filtertrommelinnenfläche (32) angeordnet ist.

9. Filterzentrifuge (10) gemäß einem der Ansprüche 1-8, wobei die Filtertrommellängsachse (L1) zumindest im Wesentlichen horizontal angeordnet ist, und wobei im Austragebetrieb die in die Nähe der Filtertrommelinnenfläche (32) bewegte Feststoffmaterial-Einlassöffnung (58) bezüglich der Filtertrommellängsachse (L1) im unteren Drittel der Filtertrommel (30) angeordnet ist.

## Claims

1. Filter centrifuge (10) for filtering a solid material (F) out of a suspension formed by the solid material (F) and a liquid, including
a filter drum (30) which defines a filter drum inner surface (32) and a filter drum longitudinal axis (L1) and which is rotatable about the filter drum longitudinal axis (L1), and
a solid material discharge device (50) for discharging the filtered-out solid material (F) from the filter drum (30) in the context of a discharge operation of the filter centrifuge (10),
wherein the solid material discharge device (50) comprises a discharge device arm (52) having a free arm end (54), a solid material discharge line (56) which is formed on the arm (52) and through which the filtered-out solid material (F) can be led out of the filter drum (30) and which has solid material inlet opening (58) which is circumferentially limited by an inlet opening edge (60) and which is disposed adjacent to the free arm end (54) and through which the filtered-out solid material (F) can get from the filter drum (30) into the solid material discharge line (56), and a blade (62) for engaging in the filtered-out solid material (F), adhering to the filter drum inner surface (32), wherein the blade (62) defines a an edge (64) extending along an edge longitudinal course (L2),
wherein the discharge device arm (52) is configured to be movable in a controlled way, such that, in discharge operation, the solid material inlet opening (58) is movable near the filter drum inner surface (32) by means of a movement of the discharge device arm (52), in order to be able to receive the filtered-out solid material (F) adhering to the filter drum inner surface (32), and
wherein the blade (62) is disposed in the solid material inlet opening (58), such that the blade (62) is disposed in a direction transverse to its edge longitudinal course (L2) on both sides of the edge (64) at a distance (A1, A2) from the inlet opening edge (60), so that removed solid material (F) can get through the solid material inlet opening (58) relative to the edge longitudinal course (L2) on both sides of the edge (64) into the solid material discharge line (56), and
in addition including a pressure difference generating device (130) for generating a pressure difference between the external environment of the solid material inlet opening (58) and an interior of the solid material discharge line (56) in such a way that the pressure in the solid material discharge line (56) is less than at the solid material inlet opening (58).

2. Filter centrifuge (10) according to claim 1, wherein the solid material inlet opening (58) and the blade (62) extend in a direction of the filter drum longitudinal axis (L1) at least substantially over the entire length of the filter drum inner surface (32).

3. Filter centrifuge (10) according to claim 1, wherein the solid material inlet opening (58) and the blade (62) extend in a direction of the filter drum longitudinal axis (L1) over equal to or less than half of the entire length of the filter drum inner surface (32), and wherein the discharge device arm (52) is, in addition, configured to be movable in a translational and controlled way, so that, at least in discharge operation, the solid material inlet opening (58) is movable by means of a translational movement of the discharge device arm (52) in a direction parallel to the filter drum longitudinal axis (L1), in order to displace the solid material inlet opening (58) and the blade (62) together parallel to the filter drum longitudinal axis (L1) .

4. Filter centrifuge (10) according to any one of claims 1 to 3, wherein the discharge device arm (52) is a hollow body having an inner cavity, and the solid material discharge line (56) is formed by the cavity of the hollow body.

5. Filter centrifuge (10) according to any one of claims 1 to 4, wherein the discharge device arm (52) is pivotable about a pivot axis (L3) disposed at a distance from the free arm end (54), which is at least substantially parallel to and offset relative to the filter drum longitudinal axis (L1).

6. Filter centrifuge (10) according to any one of claims 1 to 5, wherein the edge longitudinal course (L2) is, at least in discharge operation, at least substantially parallel to the filter drum longitudinal axis (L1).

7. Filter centrifuge (10) according to any one of claims 1 to 6, wherein a blade surface defined by the blade (62) is at least in discharge operation disposed at an angle of greater than 0° and less than 180° with respect to an inlet opening surface defined by the solid material inlet opening (58).

8. Filter centrifuge (10) according to any one of claims 1 to 7, wherein the edge (64) is at least in discharge operation disposed between the solid material inlet opening (58) and the filter drum inner surface (32) .

9. Filter centrifuge (10) according to any one of claims 1 to 8, wherein the filter drum longitudinal axis (L1) is at least substantially disposed horizontally, and wherein, in discharge operation, the solid material inlet opening (58) moved near the filter drum inner surface (32) is disposed in the lower third of the filter drum (30) relative to the filter drum longitudinal axis (L1).

## Revendications

1. Centrifugeuse filtrante (10) pour le filtrage d'un matériau solide (F) à partir d'une suspension, qui est constituée du matériau solide (F) et d'un liquide, avec
un tambour filtrant (30) qui définit une surface intérieure de tambour filtrant (32) et un axe longitudinal de tambour filtrant (L1) et qui peut tourner autour de l'axe longitudinal de tambour filtrant (L1) et
un dispositif de décharge de matériau solide (50) pour la décharge du matériau solide (F) filtré hors du tambour filtrant (30) dans le cadre d'un fonctionnement de décharge de la centrifugeuse filtrante (10),
le dispositif de décharge de matériau solide (50) comprenant un bras de dispositif de décharge (52) avec une extrémité de bras libre (54), une conduite de décharge de matériau solide (56), qui est réalisée sur le bras (52) et par l'intermédiaire de laquelle le matériau solide (F) filtré peut être évacué hors du tambour filtrant (30) et qui comprend une ouverture d'entrée de matériau solide (58), dont la circonférence est limitée par un bord d'ouverture d'entrée (60) et qui est disposée à proximité de l'extrémité libre du bras (54) et par l'intermédiaire de laquelle le matériau solide (F) filtré peut arriver du tambour filtrant (30) dans la conduite de décharge de matériau solide (56), et une lame (62) destinée à pénétrer dans le matériau solide (F) adhérant à la surface intérieure du tambour filtrant (32), la lame (62) définissant un tranchant (64) qui s'étend le long d'une extension longitudinale de tranchant (L2),
le bras du dispositif de décharge (52) étant conçu de façon à pouvoir être déplacé de manière contrôlée, de façon à ce que, en mode de décharge, l'ouverture d'entrée de matériau solide (58) puisse être déplacée, au moyen d'un déplacement du bras du dispositif de décharge (52), à proximité de la surface intérieure du tambour filtrant (32), afin de pouvoir prendre en charge le matériau solide (F) filtré adhérant à la surface intérieure du tambour filtrant (32) et
la lame (62) étant disposée dans l'ouverture d'entrée du matériau solide (58) de façon à ce que la lame (62) soit disposée dans une direction transversale par rapport à l'extension longitudinale de son tranchant (L2), des deux côtés du tranchant (64) à une distance (A1, A2) du bord de l'ouverture d'entrée (60), de façon à ce que le matériau solide (F) déchargé puisse arriver, par rapport à l'extension longitudinale du tranchant (L2), des deux côtés du tranchant (64), à travers l'ouverture d'entrée de matériau solide (58), dans la conduite de décharge de matériau solide (56) et
en outre, avec un dispositif de production d'une différence de pression (130), pour la production d'une différence de pression entre l'environnement extérieur de l'ouverture d'entrée du matériau solide (58) et l'intérieur de la conduite de décharge de matériau solide (56), de façon à ce que la pression dans la conduite de décharge de matériau solide (56) soit inférieure à l'ouverture d'entrée du matériau solide (58).

2. Centrifugeuse filtrante (10) selon la revendication 1, l'ouverture d'entrée du matériau solide (58) et la lame (62) s'étendant, dans la direction de l'axe longitudinal du tambour filtrant (L1), au moins globalement sur toute la longueur de la surface intérieure du tambour filtrant (32).

3. Centrifugeuse filtrante (10) selon la revendication 1, l'ouverture d'entrée du matériau solide (58) et la lame (62) s'étendant, dans la direction de l'axe longitudinal du tambour filtrant (L1), sur la moitié ou sur moins de la moitié de la longueur totale de la surface intérieure du tambour filtrant (32) et le bras du dispositif de décharge (52) étant en outre conçu de façon à pouvoir être déplacé en translation de manière contrôlée, de façon à ce que, au moins en mode de décharge, l'ouverture d'entrée du matériau solide (58) puisse être déplacée, au moyen d'un déplacement en translation du bras du dispositif de décharge (52) dans une direction parallèle à l'axe longitudinal du tambour filtrant (L1), afin de déplacer conjointement l'ouverture d'entrée du matériau solide (58) et la lame (62) parallèlement à l'axe longitudinal du tambour filtrant (L1).

4. Centrifugeuse filtrante (10) selon l'une des revendications 1 à 3, le bras du dispositif de décharge (52) étant un corps creux avec une cavité intérieure et la conduite de décharge de matériau solide (56) étant constituée de la cavité du corps creux.

5. Centrifugeuse filtrante (10) selon l'une des revendications 1 à 4, le bras du dispositif de décharge (52) pouvant pivoter autour d'un axe de pivotement (L3), disposé à une certaine distance de l'extrémité libre du bras (54), qui est au moins globalement parallèle à l'axe longitudinal du tambour filtrant (L1) et décalé par rapport à celui-ci.

6. Centrifugeuse filtrante (10) selon l'une des revendications 1 à 5, l'extension longitudinale du tranchant (L2) étant, au moins en mode de décharge, au moins globalement parallèle à l'axe longitudinal du tambour filtrant (L1).

7. Centrifugeuse filtrante (10) selon l'une des revendications 1 à 6, une surface de lame, définie par la lame (62), étant, au moins en mode de décharge, disposée avec un angle supérieur à 0° et inférieur à 180° par rapport à une surface d'ouverture d'entrée définie par l'ouverture d'entrée du matériau solide (58).

8. Centrifugeuse filtrante (10) selon l'une des revendications 1 à 7, le tranchant (64) étant disposée, au moins en mode de décharge, entre l'ouverture d'entrée du matériau solide (58) et la surface intérieure du tambour filtrant (32).

9. Centrifugeuse filtrante (10) selon l'une des revendications 1 à 8, l'axe longitudinal du tambour filtrant (L1) étant disposé globalement horizontalement, et, en mode de décharge, l'ouverture d'entrée du matériau solide (58), déplacée à proximité de la surface intérieure du tambour filtrant (32) par rapport à l'axe longitudinal du tambour filtrant (L1), étant disposée dans le tiers inférieur du tambour filtrant (30).
